# EUROPEAN PATENT APPLICATION

(11) **EP 4 617 922 A1**
(43) Date of publication of application: **17.09.2025**
(21) Application number: 23887340.0
(22) Date of filing: 31.03.2023
(51) Int. Cl.: G06F 18/22

(54) **TEXT MATCHING METHOD AND APPARATUS, COMPUTER-READABLE STORAGE MEDIUM, AND TERMINAL**

(30) Priority: 08.11.2022 CN 202211392755
(71) Applicant: Unidt (Shanghai) Co., Ltd., Shanghai 200040 (CN)
(72) Inventor: CAI, Hua, Shanghai 200040 (CN)
(74) Representative: Cabinet Le Guen Maillet
(86) International application number: PCT/CN2023/085304
(87) International publication number: WO 2024/098636

(57) **Abstract**

A text matching method and apparatus, a computer-readable storage medium, and a terminal. The method comprises: acquiring texts to be matched, the texts to be matched comprising a first text and a second text; constructing a plurality of bags of sentences, each bag of sentences comprising a plurality of sentences having similar semantics, the plurality of sentences being from the first text and/or the second text, and the semantics represented by different bags of sentences being different or non-similar; according to the weight value of each bag of sentences, fusing semantic vectors of the plurality of bags of sentences so as to obtain an aggregation vector, the weight value of each bag of sentences being used for representing the association degree between said bag of sentences and other bags of sentences; and according to the aggregation vector, calculating a matching result of the first text and the second text. The solution provided by the present application can improve text matching accuracy.

## Description

### CROSS-REFERENCE TO RELATED APPLICATIONS

This application claims priority to Chinese Patent Application No. 202211392755.1, filed on November 8, 2022, and entitled "TEXT MATCHING METHOD AND APPARATUS, COMPUTER READABLE STORAGE MEDIUM, AND TERMINAL", the entire disclosure of which is incorporated herein by reference.

### TECHNICAL FIELD

The present disclosure generally relates to Nature Language Processing (NLP) technology field, and more particularly, to a text matching method and apparatus, a computer readable storage medium, and a terminal.

### BACKGROUND

With the development of artificial intelligence technology, NLP technology is more and more extensively applied in various fields, and text matching technology has emerged. The text matching technology is used to measure similarity or relevance between texts. In existing techniques, accuracy of text matching still needs to be improved, especially when the text is long, the matching accuracy is significantly reduced.

Therefore, a text matching method with improved matching accuracy is required.

### SUMMARY

Embodiments of the present disclosure may improve accuracy of text matching.

In an embodiment of the present disclosure, a text matching method is provided, including: acquiring a to-be-matched text, where the to-be-matched text includes a first text and a second text; constructing a plurality of sentence bags, where each of the plurality of sentence bags includes a plurality of sentences with similar semantics, the plurality of sentences are from the first text and/or the second text, and semantics represented by different sentence bags are different or dissimilar; fusing semantic vectors of the plurality of sentence bags based on weight values of the plurality of sentence bags to acquire an aggregation vector, where the weight value of each of the plurality of sentence bags represents a degree of association between the sentence bag and other sentence bags; and calculating a matching result between the first text and the second text based on the aggregation vector.

Optionally, said constructing the plurality of sentence bags includes: extracting keywords from the to-be-matched text to acquire a keyword set, where the keyword set includes a plurality of keywords; constructing the sentence bag corresponding to each of the plurality of keywords, where the sentence bag corresponding to each of the plurality of keywords includes: sentences containing the keyword in the first text and sentences containing the keyword in the second text.

Optionally, said constructing the sentence bag corresponding to each of the plurality of keywords includes: after all the sentences containing the keyword in the first text are added to the sentence bag, adding the sentences containing the keyword in the second text to the sentence bag; or after all the sentences containing the keyword in the second text are added to the sentence bag, adding the sentences containing the keyword in the first text to the sentence bag.

Optionally, prior to said fusing the semantic vectors of the plurality of sentence bags based on the weight values of the plurality of sentence bags, the method further includes: adding an indication tag to each of the plurality of sentence bags, where the indication tag is used to distinguish sentences from different texts.

Optionally, a relative order of sentences belonging to a same text in each of the plurality of sentence bags is the same as a relative order of the sentences in the text to which the sentences belong.

Optionally, said fusing the semantic vectors of the plurality of sentence bags based on the weight values of the plurality of sentence bags to acquire the aggregation vector includes: calculating the semantic vectors of the plurality of sentence bags; performing operation on the semantic vectors of the plurality of sentence bags by using a self-attention mechanism to acquire the weight values of the plurality of sentence bags; and fusing the semantic vectors of the plurality of sentence bags based on the weight values of the plurality of sentence bags to acquire the aggregation vector.

Optionally, the aggregation vector is calculated by a pre-trained neural network model, and a training process of the neural network model includes: constructing the neural network model, where the neural network model includes a semantic representation module, an aggregation module and a classification module; acquiring training data, where the training data includes a plurality of sample sentence bags and matching labels, the plurality of sample sentence bags are constructed from sample texts including a first sample text and a second sample text, and the matching labels indicate whether the first sample text and the second sample text match; and training the neural network model using the training data until the neural network model converges.

Optionally, said fusing the semantic vectors of the plurality of sentence bags based on the weight values of the plurality of sentence bags to acquire the aggregation vector includes: updating the weight value of each of the plurality of sentence bags based on a weight value of a keyword corresponding to the sentence bag to acquire an updated weight value; and fusing the semantic vectors of the plurality of sentence bags based on the updated weight values of the plurality of sentence bags to acquire the aggregation vector.

Optionally, said calculating the matching result between the first text and the second text based on the aggregation vector includes: performing pooling processing on the aggregation vector to acquire a to-be-processed vector; and inputting the to-be-processed vector into a pre-trained classifier to acquire the matching result.

In an embodiment of the present disclosure, a text matching apparatus is provided, including: an acquisition circuitry configured to acquire a to-be-matched text, where the to-be-matched text includes a first text and a second text; a construction circuitry configured to construct a plurality of sentence bags, where each of the plurality of sentence bags includes a plurality of sentences with similar semantics, the plurality of sentences are from the first text and/or the second text, and semantics represented by different sentence bags are different or dissimilar; an aggregation circuitry configured to fuse semantic vectors of the plurality of sentence bags based on weight values of the plurality of sentence bags to acquire an aggregation vector, where the weight value of each of the plurality of sentence bags represents a degree of association between the sentence bag and other sentence bags; and a match circuitry configured to calculate a matching result between the first text and the second text based on the aggregation vector.

In an embodiment of the present disclosure, a storage medium having computer instructions stored therein is provided, where when the computer instructions are executed by a processor, the above text matching method is performed.

In an embodiment of the present disclosure, a terminal which includes a memory and a processor is provided, where the memory has computer instructions stored therein, and when the processor executes the computer instructions, the above text matching method is performed.

Embodiments of the present disclosure may provide following advantages.

In the embodiments of the present disclosure, a to-be-matched text is acquired, where the to-be-matched text includes a first text and a second text. A plurality of sentence bags are constructed, where each of the plurality of sentence bags includes a plurality of sentences with similar semantics, the plurality of sentences are from the first text and/or the second text, and semantics represented by different sentence bags are different or dissimilar. Semantic vectors of the plurality of sentence bags are fused based on weight values of the plurality of sentence bags to acquire an aggregation vector, where the weight value of each of the plurality of sentence bags represents a degree of association between the sentence bag and other sentence bags. A matching result between the first text and the second text is calculated based on the aggregation vector.

Compared with the existing text matching method, in the embodiments of the present disclosure, the plurality of sentence bags are constructed, each sentence bag includes the sentences with similar semantics that come from the first text and/or the second text. By constructing the sentence bags, the sentences with similar semantics in the first text and the second text are collected in the same sentence bag, which can not only filter out redundant information in the first text and the second text, but also break up a long text into short texts that are easy for model learning and calculation for processing. Further, the semantic vectors of the plurality of sentence bags are fused based on the weight values of the sentence bags, and the matching result is calculated based on the aggregation vector acquired by fusion. As the weight value of each sentence bag represents the degree of association between the sentence bag and other sentence bags, the fusion based on the weight values can not only re-aggregate scattered texts but also make the aggregation vector acquired by fusion well characterize the semantic information of the first text and the second text, thereby acquiring a matching result with higher accuracy.

Further, in the embodiments of the present disclosure, the keywords are extracted from the to-be-matched text to acquire a keyword set, and the plurality of sentence bags are constructed based on the keywords included in the keyword set. With such a solution, the first text and the second text are characterized by the keywords, which enables to construct the sentence bags more accurately.

Further, in the embodiments of the present disclosure, after all the sentences containing the keyword in one text are added to the sentence bag, the sentences containing the keyword in the other text are added to the sentence bag. With such a solution, the sentence bags have structural information between texts, so that the semantic vectors of subsequent multiple sentence bags carry text-level structural information, and the weight values are calculated based on the text-level structural information, which is conducive to improving accuracy of text matching.

Further, in the embodiments of the present disclosure, a relative order of sentences belonging to a same text in each of the plurality of sentence bags is the same as a relative order of the sentences in the text to which the sentences belong. With such a solution, each sentence bag can have the structural information inside each text, so that the semantic vector of the sentence bag can also carry the sentence-level structural information inside the text. In this manner, the weight values are calculated based on the sentence-level structural information, which is conducive to improving the accuracy of text matching.

### BRIEF DESCRIPTION OF THE DRAWINGS

FIG. 1 is a flow chart of a text matching method according to an embodiment;
FIG. 2 is a diagram of a sentence bag according to an embodiment;
FIG. 3 is a diagram of a neural network model according to an embodiment; and
FIG. 4 is a structural diagram of a text matching apparatus according to an embodiment.

### DETAILED DESCRIPTION

As described in the background, a text matching method with improved matching accuracy is required.

In the exiting techniques, an unsupervised algorithm is usually used to extract keywords contained in texts, then similarity between the texts is directly calculated based on word vectors of the keywords in the texts, and finally a matching result of the texts is determined by the similarity. It is found after research that when such a solution is adopted, there may be a lot of redundancy in content of the texts if the texts are relatively long, which causes features of the texts to be not prominent. In this situation, the similarity between the texts acquired based on the word vector cannot accurately represent the actual similarity between the texts.

In addition, in the existing techniques, deep learning methods are generally used to perform text matching. Specifically, a neural network is trained using training samples which are pre-labeled with actual matching results of text pairs in the training samples. The training enables the neural network to have the ability to determine whether texts match. With such a solution, only sentence-length texts can be processed, and it is difficult to process article-length texts. In other words, it is difficult to match long texts. A main reason is that as the length of the text increases, the amount of calculation of the model also increases greatly, and accordingly accuracy cannot be guaranteed, and a matching process is relatively inefficient.

From above, in the existing techniques, in an application scenario of long text matching, the accuracy of text matching still needs to be improved.

To solve the above technical problems, embodiments of the present disclosure provide a text matching method. In the embodiments of the present disclosure, a to-be-matched text is acquired, where the to-be-matched text includes a first text and a second text. A plurality of sentence bags are constructed, where each of the plurality of sentence bags includes a plurality of sentences with similar semantics, the plurality of sentences are from the first text and/or the second text, and semantics represented by different sentence bags are different or dissimilar. Semantic vectors of the plurality of sentence bags are fused based on weight values of the plurality of sentence bags to acquire an aggregation vector, where the weight value of each of the plurality of sentence bags represents a degree of association between the sentence bag and other sentence bags. A matching result between the first text and the second text is calculated based on the aggregation vector.

Compared with the existing text matching method, in the embodiments of the present disclosure, the plurality of sentence bags are constructed, each sentence bag includes the sentences with similar semantics that come from the first text and/or the second text. By constructing the sentence bags, the sentences with similar semantics in the first text and the second text are collected in the same sentence bag, which can not only filter out redundant information in the first text and the second text, but also break up a long text into short texts that are easy for model learning and calculation for processing. Further, the semantic vectors of the plurality of sentence bags are fused based on the weight values of the sentence bags, and the matching result is calculated based on the aggregation vector acquired by fusion. As the weight value of each sentence bag represents the degree of association between the sentence bag and other sentence bags, the fusion based on the weight values can not only re-aggregate scattered texts but also make the aggregation vector acquired by fusion well characterize the semantic information of the first text and the second text, thereby acquiring a matching result with higher accuracy.

In order to clarify the objects, characteristics and advantages of the disclosure, embodiments of present disclosure will be described in detail in conjunction with accompanying drawings.

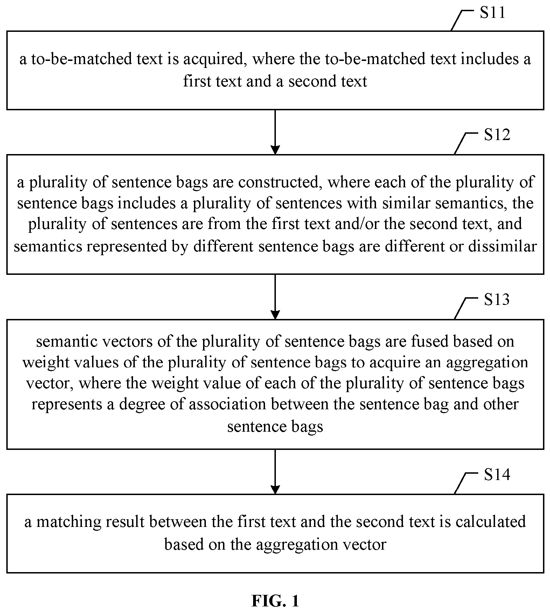

Referring to FIG. 1, FIG. 1 is a flow chart of a text matching method according to an embodiment. The method may be applied to a terminal. The terminal may be various existing terminal devices with data receiving and data processing capabilities, for example, it may be a mobile phone, a computer, an Internet of Things (IoT) device, or a server, which is not limited in the embodiments of the present disclosure. Specifically, the method shown in FIG. 1 may include S11, S12, S 13 and S14.

In S11, a to-be-matched text is acquired, where the to-be-matched text includes a first text and a second text.

In S12, a plurality of sentence bags are constructed, where each of the plurality of sentence bags includes a plurality of sentences with similar semantics, the plurality of sentences are from the first text and/or the second text, and semantics represented by different sentence bags are different or dissimilar.

In S13, semantic vectors of the plurality of sentence bags are fused based on weight values of the plurality of sentence bags to acquire an aggregation vector, where the weight value of each of the plurality of sentence bags represents a degree of association between the sentence bag and other sentence bags.

In S14, a matching result between the first text and the second text is calculated based on the aggregation vector.

It could be understood that, in some embodiments, the method may be implemented in a form of a software program which runs in a processor integrated in a chip or a chip module. Alternatively, the method may be implemented by hardware or by a combination of software and hardware.

In some embodiments, in S11, the to-be-matched text is acquired, where the to-be-matched text includes the first text and the second text. The first text and/or the second text may be a long text that is a text with a character count greater than a preset threshold or a text with a sentence count greater than or equal to a preset threshold, but is not limited thereto.

In some embodiments, the first text and/or the second text may be acquired in real time from an external user equipment, may be pre-stored in a memory of a terminal executing an embodiment of the present disclosure, or may be read from a database coupled to a terminal executing an embodiment of the present disclosure, which is not limited in the embodiment. In a specific example, the first text and the second text may be uploaded by a user to a terminal executing an embodiment of the present disclosure via a user equipment. The user in the embodiment may refer to a user with requirement on text matching.

It should be noted that the first text and the second text may be acquired from a same device or from different devices, which is not limited in the embodiments.

It should also be noted that this embodiment does not limit a format of the to-be-matched text. The first text may be in a Document (DOC) format, a Portable Document Format (PDF), or a Text (TXT) format, but is not limited thereto.

Further, content of the first text and the second text may belong to a same field (e.g., technical field, disclosure field, etc.).

In a specific example, the first text and the second text may both be legal documents, that is, the field is legal document field. The legal document may refer to a text involving legal content, for example, a normative legal document or a nonnormative legal document. More specifically, the legal document in the embodiment may be a court transcript, a judgment document, etc., but is not limited thereto. With the text matching method provided in the embodiment of the present disclosure, it is possible to more accurately determine whether the legal documents match each other.

In another specific example, the first text and the second text may be news documents, that is, the field is news document field. With the text matching method provided in the embodiment of the present disclosure, it is possible to more accurately determine whether two news documents report on the same or similar news events.

In another specific example, the first text and the second text may be academic papers, that is, the field is academic papers field. With the text matching method provided in the embodiment of the present disclosure, it is possible to more accurately determine whether two academic papers are similar, or whether there is a citation relationship, etc.

In some embodiments, in S12, the plurality of sentence bags of the to-be-matched text are constructed, where each sentence bag includes the plurality of sentences with similar semantics, and the semantics represented by different sentence bags are different or dissimilar. Sentences in each sentence bag come from the first text and/or the second text. It should be noted that in the embodiment, a sentence bag may include sentences in the first text and sentences in the second text, or may only include sentences in the first text, or may only include sentences in the second text, which is not limited in the embodiment.

In some embodiments, the plurality of sentence bags may be constructed based on keywords.

Specifically, keywords may be extracted from the to-be-matched text to acquire a keyword set which includes multiple keywords. Keywords may be names of people, names of places, topics, etc. in the text, but are not limited thereto.

More specifically, keyword extraction may be performed on the first text to acquire keywords of the first text, and keyword extraction may be performed on the second text to acquire keywords of the second text. Afterward, the keywords of the first text and the keywords of the second text may be deduplicated to acquire the keyword set. Therefore, the keyword set includes both the keywords in the first text and the keywords in the second text.

In some embodiments, keyword extraction may be implemented by processing the to-be-matched text using an unsupervised algorithm. For example, the unsupervised algorithm may be a Term Frequency-Inverse Document Frequency (TF-IDF) algorithm, a Text Rank algorithm, etc., but is not limited thereto. Alternatively, keyword extraction may be implemented by processing the to-be-matched text using a supervised algorithm. For example, the supervised algorithm may be an algorithm based on a Named Entity Recognition (NER) model, etc.

In some embodiments, the number of keywords extracted from each text may be a preset value, or may be determined dynamically based on the text, which is not limited in the embodiment. In some embodiments, the keywords extracted from the first text and/or the second text have weight values which indicate the importance of the keywords in the text. Further, keywords whose weight values are less than or equal to a preset weight threshold may be eliminated to avoid constructing a large number of sentence bags.

Further, for each keyword in the keyword set, a sentence bag corresponding to the keyword may be generated. In an initial state, the generated sentence bag is empty. Further, for each sentence bag corresponding to a keyword, the sentences containing the keyword in the first text and the second text may be added to the sentence bag, thereby acquiring sentence bags corresponding to a plurality of keywords. In other words, the keywords and the sentence bags are in one-to-one correspondence.

Further, the first text and the second text may be decomposed to acquire a plurality of sentences contained in the first text and a plurality of sentences contained in the second text. The text may be decomposed based on punctuation marks such as a period, an exclamation mark, and a question mark.

In some embodiments, the sentences in each sentence bag may be added sequentially.

Sequential adding may include text-level sequential adding.

Specifically, after all sentences containing the keywords in the first text are added to the sentence bags, the sentences containing the keywords in the second text are added to the sentence bags. More specifically, for each sentence bag corresponding to a keyword, after all the sentences containing the keyword in the first text are added to the sentence bag, the sentences containing the keyword in the second text are added to the sentence bag.

Alternatively, after all the sentences containing the keywords in the second text are added to the sentence bags, the sentences containing the keywords in the first text are added to the sentence bags. Specifically, for each sentence bag corresponding to a keyword, after all the sentences containing the keyword in the second text are added to the sentence bag, the sentences containing the keyword in the first text are added to the sentence bag.

Further, an indication tag may be added to each sentence bag to distinguish sentences from different texts. In some embodiments, an indication tag may be set after the last added sentence of each text in the sentence bag. Thus, each sentence bag constructed has structural information between texts.

Alternatively, the sequential adding may include sentence-level sequential adding.

Specifically, the sentences in each text may be sequentially traversed based on the keywords, and the traversed sentences containing the keywords are added to the sentence bags in sequence. Accordingly, a relative order of the sentences belonging to the same text in each sentence bag constructed is the same as a relative order of the sentences in the text to which they belong. Thus, each sentence bag constructed has structural information inside each text. The structural information inside the text can be understood as position information of the sentences in the text.

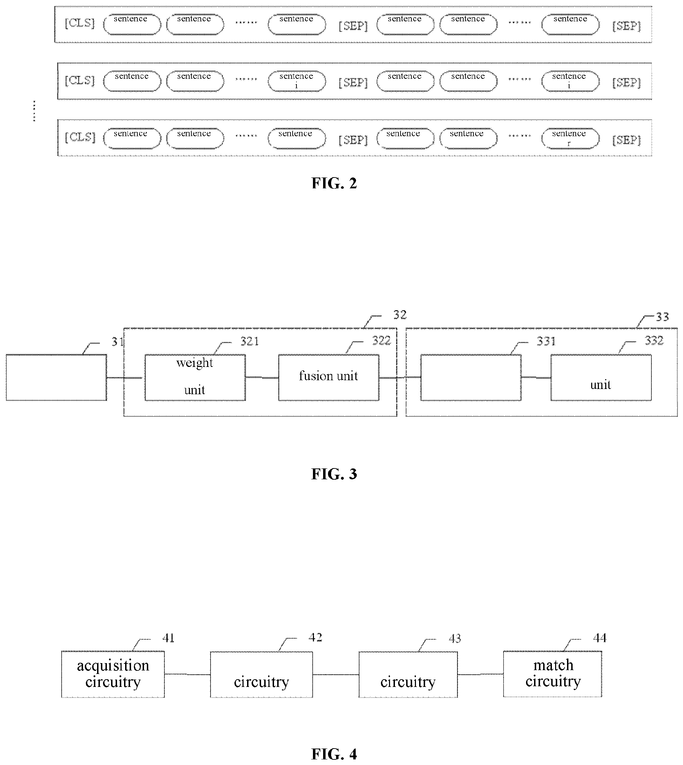

Referring to FIG. 2, FIG. 2 is a diagram of a sentence bag according to an embodiment.

As shown in FIG. 2, assuming that the number of keywords is N, N sentence bags can be constructed, where N is an integer greater than 1. Taking sentence bag 1 as an example, the keyword corresponding to sentence bag 1 is recorded as keyword 1. Sentences containing keyword 1 in the first text (for example, sentence a, sentence b, ..., sentence c) are added to sentence bag 1. A relative order of sentence a, sentence b, ..., sentence c in sentence bag 1 is the same as a relative order of sentence a, sentence b, ..., sentence c in the first text.

Further, after all the sentences containing keyword 1 in the first text are added to sentence bag 1, an indication tag [SEP] is added after the last sentence (i.e., sentence c) of the first text added to sentence bag 1 to indicate that the sentences before the indication tag are from the first text.

Further, the sentences containing keyword 1 in the second text (e.g., sentence d, sentence e, ..., sentence f) are added to sentence bag 1 after the indication tag [SEP]. A relative order of sentence d, sentence e, ..., sentence f in sentence bag 1 is the same as a relative order of sentence d, sentence e, ..., sentence f in the second text. Further, after all the sentences containing keyword 1 in the second text are added to sentence bag 1, an indication tag [SEP] is added after the last sentence (i.e., sentence f) of the second text added to sentence bag 1 to indicate that the sentences before the indication tag and after the previous indication tag are from the second text.

In some embodiments, a sentence bag indication tag may be arranged at the beginning of each sentence bag. For example, [CLS] shown in FIG. 2 is a sentence bag indication tag. The sentence bag indication tag may be used to indicate the semantic vector of each sentence bag in S13.

A construction process of the other (N-1) sentence bags in FIG. 2 can refer to the above description of sentence bag 1, which is not repeated here.

From above, in the embodiments of the present disclosure, the first text and the second text to-be-matched are decomposed into a plurality of sentence bags each of which includes a plurality of sentences with similar semantics. By constructing the sentence bags, long texts are broken into short texts, and not only key semantic information is refined and redundant information is eliminated, but also the structural information of the text is retained as much as possible, which is conducive to ensuring accuracy of subsequent matching. In the embodiments, there is no position information or structural information between different sentence bags.

In other embodiments, the sentence bags may not be constructed based on keywords.

Specifically, after decomposing the first text and the second text into a plurality of sentences, each sentence in the first text and the second text may be vectorized to acquire a semantic vector of each sentence in the first text and a semantic vector of each sentence in the second text. Further, sentence bags may be constructed based on the similarity between each sentence in the first text and each sentence in the second text, so that sentences with similar semantics are grouped into the same sentence bag, and sentences with different or dissimilar semantics are scattered into different sentence bags.

Still referring to FIG. 1, in some embodiments, in S13, the semantic vectors and weight values of the sentence bags are calculated, and the semantic vectors of the sentence bags are fused based on the weight values of the sentence bags to acquire an aggregation vector, so that a matching result of the first text and the second text is calculated based on the aggregation vector in S14.

In some embodiments, each sentence bag is regarded as a text, and the semantic vector of each sentence bag may be calculated. The semantic vector refers to vector representation in a semantic space. As the sentence bag in the embodiment has the structural information between and within the texts, the semantic vector of the sentence bag also carries the structural information between and within the texts.

Further, the weight value of each sentence bag may be calculated based on the semantic vectors of the sentence bags, and the weight value of each sentence bag can be used to represent the degree of association between the sentence bag and other sentence bags. Alternatively, the weight value of each sentence bag may also be understood as the importance of the sentence bag in the to-be-matched text. The larger the weight value, the greater the degree of association between the sentence bag and other sentence bags, and the more important the semantic represented by the sentence bag in the to-be-matched text. The smaller the weight value, the smaller the degree of association between the sentence bag and other sentence bags, and the less important the semantic represented by the sentence bag in the to-be-matched text.

Further, the semantic vectors of the sentence bags may be fused based on the weight value of each sentence bag to acquire an aggregation vector. By fusion, the scattered sentence bags can be re-aggregated, and the aggregation vector may include the semantic information of all the sentence bags.

In some embodiments, the aggregation vector and the matching result may be calculated by a pre-trained neural network model.

Referring to FIG. 3, FIG. 3 is a diagram of a neural network model according to an embodiment. Before S13 and S14, a neural network model may be constructed first, and the neural network model may be trained using training data until the neural network model converges. The neural network model and its training process are described below.

Specifically, the neural network model may include a semantic representation module 31, an aggregation module 32 and a classification module 33. The training data may include a plurality of sample sentence bags and matching labels, the plurality of sample sentence bags are constructed by sample texts which may include a first sample text and a second sample text, and the matching label indicates whether the first sample text and the second sample text match. For example, if the matching label is 1, it may indicate that the first sample text and the second sample text match, and if the matching label is 0, it may indicate that the first sample text and the second sample text do not match.

During the training process, a plurality of sentence bags corresponding to the first sample text and the second sample text may be constructed, which are referred to as the plurality of sample sentence bags. Specific content of constructing the plurality of sample sentence bags for the first sample text and the second sample text may refer to the description of S12 above, which is not repeated here.

Further, the plurality of sample sentence bags may be input into the semantic representation module 31 that may be a model for calculating semantic vectors. In some embodiments, the semantic representation module 31 may be a Bidirectional Encoder Representation from Transformers (BERT) network, but is not limited to this. During the training process, the semantic representation module 31 may calculate sentences in each sample sentence bag to acquire the semantic vector of each sample sentence bag.

Further, the semantic vectors of the plurality of sample sentence bags may be input to the aggregation module 32 that may be configured to re-aggregate the scattered sample sentence bags. In the training process, the input of the aggregation module 32 is the semantic vectors of the sample sentence bags, and the output of the aggregation module 32 is a sample aggregation vector acquired by aggregation.

Specifically, the aggregation module 32 may include a weight calculation unit 321 and a fusion unit 322. In a model usage stage, the weight calculation unit 321 is configured to calculate a weight value of each sample sentence bag, and the fusion unit 322 is configured to fuse the semantic vectors of the plurality of sample sentence bags based on the weight values of the sample sentence bags to acquire the sample aggregation vector.

In the embodiments, the weight calculation unit 321 may use a Multi-headed Self-attention mechanism to calculate the weight values. In some embodiments, the weight calculation unit 321 may include multiple self-attention modules connected in series. Further, the fusion performed by the fusion unit 322 may be weighted fusion, etc., but is not limited thereto.

Further, the sample aggregation vector may be input into the classification module 33 that calculates a matching result of the first sample text and the second sample text based on the sample aggregation vector. Specifically, the classification module 33 may include a pooling unit 331 and a classification unit 332, where the pooling unit 331 may be a pooling layer, and the classification unit 332 may be a classifier. In some embodiments, the sample aggregation vector is a high-dimensional vector. The pooling unit 331 performs pooling calculation on the sample aggregation vector to reduce the dimension of the sample aggregation vector to acquire a one-dimensional to-be-processed sample vector. Further, the classification unit 332 may perform operation on the one-dimensional to-be-processed sample vector to acquire a classification result.

Further, a gradient descent method may be adopted to update parameters of the neural network model based on differences between the matching result and the matching label. The above steps are repeated after the parameters are updated until the neural network model converges.

With the above process, the trained neural network model is acquired.

The plurality of sentence bags in S12 may be input into the trained neural network model, and the semantic representation module 31 may calculate the semantic vectors of the plurality of sentence bags.

Further, the weight calculation unit 321 may use the Multi-headed Self-attention mechanism to calculate the weight value of each sentence bag based on the semantic vector of each sentence bag. The fusion unit 322 further fuses the semantic vectors of the plurality of sentence bags based on the weight values of the plurality of sentence bags to acquire an aggregation vector. It should be noted that as there is no position information between the plurality of sentence bags in the embodiment, position information is not embedded in a calculation process of the fusion unit 332. In the embodiment, in the process of constructing the sentence bags, the structural information or position information of the texts and sentences is embedded in each sentence bag, so that the semantic vectors of the sentence bags can carry the position information, which makes the aggregation vector contain both the semantic information of the to-be-matched text and the structural information of the to-be-matched text.

Further, the pooling unit 331 may pool the high-dimensional aggregation vector to acquire a one-dimensional to-be-processed vector. The classification unit 332 may perform operation on the matching result of the first text and the second text based on the to-be-processed vector, where the matching result may be "match" or "no match".

In another embodiment, the sentence bag is constructed based on keywords included in a keyword set. As described above, each keyword may have a weight value. After the weight value of each sentence bag is calculated based on the semantic vectors of the sentence bags, the calculated weight values of the sentence bags may be updated, optimized or corrected in combination with the weight values of the keywords to acquire updated weight values, as the keywords and the sentence bags have one-to-one correspondence. For example, for each sentence bag, a sum of each weight value calculated using the Multi-headed Self-attention mechanism and the weight value of the corresponding keyword are used as the updated weight value. Further, the semantic vectors of the plurality of sentence bags may be fused to acquire an aggregation vector based on the updated weight values of the plurality of sentence bags.

Referring to FIG. 4, FIG. 4 is a structural diagram of a text matching apparatus according to an embodiment. The text matching apparatus may include an acquisition circuitry 41, a construction circuitry 42, an aggregation circuitry 43 and a match circuitry 44.

The acquisition circuitry 41 is configured to acquire a to-be-matched text, where the to-be-matched text includes a first text and a second text.

The construction circuitry 42 is configured to construct a plurality of sentence bags, where each of the plurality of sentence bags includes a plurality of sentences with similar semantics, the plurality of sentences are from the first text and/or the second text, and semantics represented by different sentence bags are different or dissimilar.

The aggregation circuitry 43 is configured to fuse semantic vectors of the plurality of sentence bags based on weight values of the plurality of sentence bags to acquire an aggregation vector, where the weight value of each of the plurality of sentence bags represents a degree of association between the sentence bag and other sentence bags.

The match circuitry 44 is configured to calculate a matching result between the first text and the second text based on the aggregation vector.

More details of working principles, working modes and advantages of the apparatus in the embodiments can be referred to related descriptions of the above method, and are not repeated here.

In an embodiment of the present disclosure, a computer readable storage medium having computer instructions stored therein is provided, where when the computer instructions are executed, steps of the above method are performed. In some embodiments, the storage medium may include a ROM, a RAM, a magnetic disk or an optical disk. In some embodiments, the storage medium may include a non-volatile or a non-transitory memory.

In an embodiment of the present disclosure, a terminal including a memory and a processor is provided, where the memory has computer instructions stored therein, and when the processor executes the computer instructions, steps of the above method are performed. The terminal may be but not limited to a terminal device such as a mobile phone, a computer or a tablet computer.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general-purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire or wireless.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

It should be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more. The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A text matching method, **characterized by** comprising:
acquiring a to-be-matched text, wherein the to-be-matched text comprises a first text and a second text;
constructing a plurality of sentence bags, wherein each of the plurality of sentence bags comprises a plurality of sentences with similar semantics, the plurality of sentences are from the first text and/or the second text, and semantics represented by different sentence bags are different or dissimilar;
fusing semantic vectors of the plurality of sentence bags based on weight values of the plurality of sentence bags to acquire an aggregation vector, wherein the weight value of each of the plurality of sentence bags represents a degree of association between the sentence bag and other sentence bags; and
calculating a matching result between the first text and the second text based on the aggregation vector.

2. The text matching method according to claim 1, wherein said constructing the plurality of sentence bags comprises:
extracting keywords from the to-be-matched text to acquire a keyword set, wherein the keyword set comprises a plurality of keywords;
constructing the sentence bag corresponding to each of the plurality of keywords, wherein the sentence bag corresponding to each of the plurality of keywords comprises: sentences containing the keyword in the first text and sentences containing the keyword in the second text.

3. The text matching method according to claim 2, wherein said constructing the sentence bag corresponding to each of the plurality of keywords comprises:
after all the sentences containing the keyword in the first text are added to the sentence bag, adding the sentences containing the keyword in the second text to the sentence bag; or
after all the sentences containing the keyword in the second text are added to the sentence bag, adding the sentences containing the keyword in the first text to the sentence bag.

4. The text matching method according to claim 1, wherein prior to said fusing the semantic vectors of the plurality of sentence bags based on the weight values of the plurality of sentence bags, the method further comprises:
adding an indication tag to each of the plurality of sentence bags, wherein the indication tag is used to distinguish sentences from different texts.

5. The text matching method according to claim 1, wherein a relative order of sentences belonging to a same text in each of the plurality of sentence bags is the same as a relative order of the sentences in the text to which the sentences belong.

6. The text matching method according to claim 1, wherein said fusing the semantic vectors of the plurality of sentence bags based on the weight values of the plurality of sentence bags to acquire the aggregation vector comprises:
calculating the semantic vectors of the plurality of sentence bags;
performing operation on the semantic vectors of the plurality of sentence bags by using a self-attention mechanism to acquire the weight values of the plurality of sentence bags; and
fusing the semantic vectors of the plurality of sentence bags based on the weight values of the plurality of sentence bags to acquire the aggregation vector.

7. The text matching method according to claim 6, wherein the aggregation vector is calculated by a pre-trained neural network model, and a training process of the neural network model comprises:
constructing the neural network model, wherein the neural network model comprises a semantic representation module, an aggregation module and a classification module;
acquiring training data, wherein the training data comprises a plurality of sample sentence bags and matching labels, the plurality of sample sentence bags are constructed from sample texts comprising a first sample text and a second sample text, and the matching labels indicate whether the first sample text and the second sample text match; and
training the neural network model using the training data until the neural network model converges.

8. The text matching method according to claim 6, wherein said fusing the semantic vectors of the plurality of sentence bags based on the weight values of the plurality of sentence bags to acquire the aggregation vector comprises:
updating the weight value of each of the plurality of sentence bags based on a weight value of a keyword corresponding to the sentence bag to acquire an updated weight value; and
fusing the semantic vectors of the plurality of sentence bags based on the updated weight values of the plurality of sentence bags to acquire the aggregation vector.

9. The text matching method according to claim **1,** wherein said calculating the matching result between the first text and the second text based on the aggregation vector comprises:
performing pooling processing on the aggregation vector to acquire a to-be-processed vector; and
inputting the to-be-processed vector into a pre-trained classifier to acquire the matching result.

10. A text matching apparatus, **characterized by** comprising:
an acquisition circuitry configured to acquire a to-be-matched text, wherein the to-be-matched text comprises a first text and a second text;
a construction circuitry configured to construct a plurality of sentence bags, wherein each of the plurality of sentence bags comprises a plurality of sentences with similar semantics, the plurality of sentences are from the first text and/or the second text, and semantics represented by different sentence bags are different or dissimilar;
an aggregation circuitry configured to fuse semantic vectors of the plurality of sentence bags based on weight values of the plurality of sentence bags to acquire an aggregation vector, wherein the weight value of each of the plurality of sentence bags represents a degree of association between the sentence bag and other sentence bags; and
a match circuitry configured to calculate a matching result between the first text and the second text based on the aggregation vector.

11. A computer readable storage medium having computer instructions stored therein, **characterized in that** when the computer instructions are executed by a processor, the method of any one of claims 1 to 9 is performed.

12. A terminal, comprising a memory and a processor, **characterized in that** the memory has computer instructions stored therein, and when the processor executes the computer instructions, the method of any one of claims 1 to 9 is performed.
